(19) Europäisches Patentamt
European Patent Office
Office européen des brevets

(11) **EP 1 699 677 B1**

(12) **FASCICULE DE BREVET EUROPEEN**

(45) Date de publication et mention
de la délivrance du brevet:
**20.02.2008 Bulletin 2008/08**

(21) Numéro de dépôt: **04816580.7**

(22) Date de dépôt: **20.12.2004**

(51) Int Cl.:
***B62D 7/15*** ***(2006.01)***

(86) Numéro de dépôt international:
**PCT/FR2004/050731**

(87) Numéro de publication internationale:
**WO 2005/063551 (14.07.2005 Gazette 2005/28)**

(54) **DISPOSITIF DE BRAQUAGE DES ROUES ARRIERE D' UN VEHICULE AUTOMOBILE**

HINTERRADLENKVORRICHTUNG FÜR KRAFTFAHRZEUG

REAR-WHEEL-STEERING DEVICE FOR MOTOR VEHICLE

(84) Etats contractants désignés:
**AT BE BG CH CY CZ DE DK EE ES FI FR GB GR
HU IE IS IT LI LT LU MC NL PL PT RO SE SI SK TR**

(30) Priorité: **23.12.2003 FR 0315264**

(43) Date de publication de la demande:
**13.09.2006 Bulletin 2006/37**

(73) Titulaire: **RENAULT S.A.S.**
**92100 Boulogne Billancourt (FR)**

(72) Inventeurs:
• **GUEGAN, Stéphane**
**F-78000 VERSAILLES (FR)**
• **LE VOURCH, Yves**
**F-78150 LE CHESNAY (FR)**
• **POTHIN, Richard**
**F-78760 JOUARS PONCHARTRAIN (FR)**

(74) Mandataire: **Guyon, Rodolphe C. et al**
**Renault Technocentre**
**Service 0267**
**TCR GRA 236**
**1, Avenue du Golf**
**78288 Guyancourt Cedex (FR)**

(56) Documents cités:
**FR-A- 2 664 552** **US-A- 5 116 078**
**US-A- 5 227 974**

• **PATENT ABSTRACTS OF JAPAN vol. 013, no. 281, 27 juin 1989 (1989-06-27) -& JP 01 074177 A (MAZDA), 20 mars 1989 (1989-03-20)**
• **PATENT ABSTRACTS OF JAPAN vol. 016, no. 350, 28 juillet 1992 (1992-07-28) -& JP 04 108075 A (DAIHATSU), 9 avril 1992 (1992-04-09)**

**Description**

La présente invention concerne une stratégie de commande à basse vitesse appliquée à un véhicule équipé de quatre roues directrices en marche avant et marche arrière.

Dans le domaine automobile, on souhaite optimiser le comportement des véhicules de manière à améliorer d'une part le plaisir de conduite et le confort des passagers, et d'autre part le comportement du véhicule dans différentes situations de conduite telles qu'un contournement d'obstacle ou une phase de parcage.

Afin de répondre à ces objectifs, des véhicules sont équipés de quatre roues directrices. Ce système peut être piloté par une stratégie qui a pour objectif d'optimiser, pour chaque vitesse du véhicule, la réponse latérale du véhicule à un coup de volant du conducteur. L'optimisation est faite suivant les critères de confort et d'agrément de conduite cités ci dessus. Un des objectifs est d'améliorer le comportement du véhicule, en particulier sa maniabilité pour de zones de faibles vitesses.

JP A 01 074 177 décrit un procédé de calcul de l'angle de braquage des roues arrière d'un véhicule lors d'une marche arrière.

Il est connu du document US5337850 une stratégie qui comporte un braquage en phase des roues arrières pour des faibles braquages des roues avant, et un braquage en opposition de phase des roues arrières pour un braquage important des roues avant, la transition entre ces deux types de braquage s'effectuant par un filtrage qui prend en compte la dérivée de la valeur de l'angle avant. De plus, ce document ne traite pas de la stratégie à adopter en cas de marche arrière.

La présente invention vise à proposer une loi de commande, pour un véhicule équipé de quatre roues directrices, qui pilote le système à basse vitesse. Cette structure permet de gérer la maniabilité du véhicule à basse vitesse en marche avant et sa stabilisation en marche arrière.

L'invention protège un dispositif selon la revendication 1 de braquage des roues arrière d'un véhicule automobile apte à braquer les roues arrière du véhicule en opposition de phase, ou en phase, avec les roues avant selon des caractéristiques du véhicule, caractérisé en ce qu'il comprend une unité centrale de calcul dans laquelle un bloc, dit basse vitesse, calcule un angle de braquage des roues arrière selon différentes stratégies qui dépendent du signe de la vitesse.

Selon une caractéristique de l'invention, le bloc dit basse vitesse comprend un module stabilisation marche arrière, un premier module de transition, un module de maniabilité marche arrière, un module remise à zéro, un module de maniabilité marche avant, et un second module de transition, ces différents modules étant activés respectivement lorsque la vitesse varie d'une vitesse importante en marche arrière à une vitesse importante en marche avant.

L'invention porte également sur un véhicule selon la revendication 2.

L'invention propose également un procédé selon la revendication 3 de commande de braquage des roues arrières d'un véhicules automobiles dans lequel on active un bloc dit basse vitesse pour calculer un angle de braquage des roues arrière du véhicule ou lors d'un roulage sans rapport de vitesse engagé.

Selon différentes caractéristiques de l'invention,

le bloc dit basse vitesse reçoit en entrée la vitesse du véhicule, la valeur de l'angle de braquage des roues avant, et une valeur significative du rapport de vitesses engagé,

le bloc reçoit une information relative à la vitesse du véhicule, et en ce que l'angle de braquage des roues arrière est calculé pour la plage complète des marches arrière du véhicule, de sorte que l'angle de braquage des roues arrières est de signe différent de l'angle de braquage des roues avant lorsque la valeur absolue de la vitesse est inférieure à un seuil prédéterminé Vopp_phase,

l'angle de braquage des roues arrière est calculé pour la plage complète des marche arrière du véhicule, de sorte que l'angle de braquage des roues arrières est de même signe que l'angle de braquage des roues avant lorsque la valeur absolue de la vitesse en marche arrière est supérieure à un seuil prédéterminé Vphase,

l'angle de braquage des roues arrière est calculé pour la plage complète des marche arrière du véhicule, de sorte qu'une première stratégie de transition par interpolation linéaire donne un angle de braquage des roues arrières lorsque la valeur absolue de la vitesse en marche arrière est supérieure à un seuil prédéterminé Vopp_phase et inférieure à un seuil prédéterminé Vphase,

l'angle de braquage des roues arrière est nulle lorsque la valeur absolue de la vitesse en marche arrière est inférieure à la vitesse minimal positive paramétrée dans le bloc basse vitesse,

une seconde stratégie de transition permet de calculer l'angle de braquage des roues arrière lorsque la vitesse du véhicule en marche avant tend vers les vitesses adaptées aux stratégies dites hautes vitesses du véhicule.

La présente invention sera mieux comprise à l'étude de la description détaillée qui va suivre et des dessins annexés parmi lesquels :

- la figure 1 est une vue schématique d'un véhicule équipé d'un dispositif de braquage selon un aspect de l'invention

EP 1 699 677 B1

- la figure 2 est un schéma de l'unité centrale selon l'invention,

- la figure 3 est un schéma du bloc basse vitesse selon l'invention

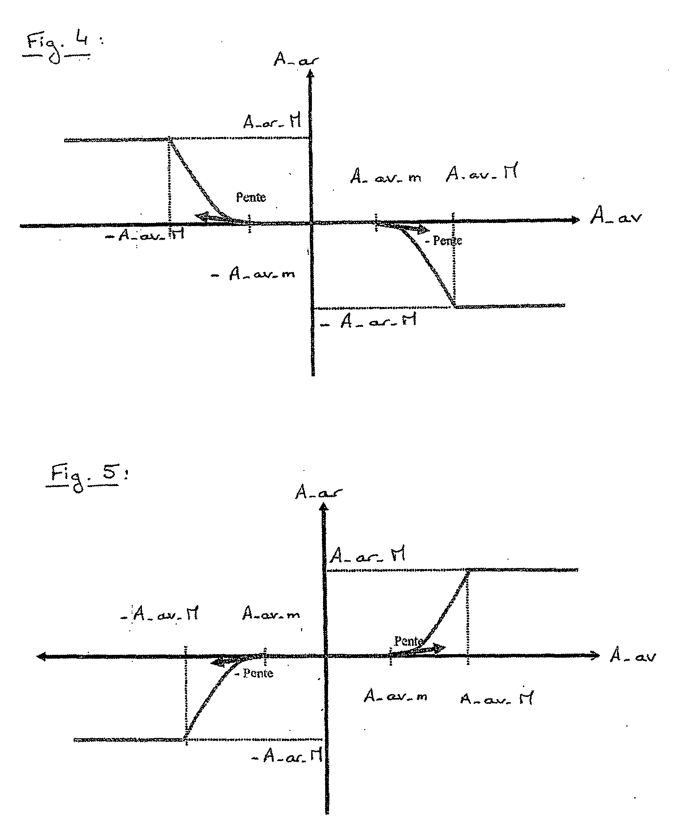

- la figure 4 représente la courbe de l'angle de braquage des roues arrière en fonction de l'angle de braquage des roues avant, pour un braquage en opposition de phase,

- la figure 5 représente la courbe de l'angle de braquage des roues arrière en fonction de l'angle de braquage des roues avant, pour un braquage en phase.

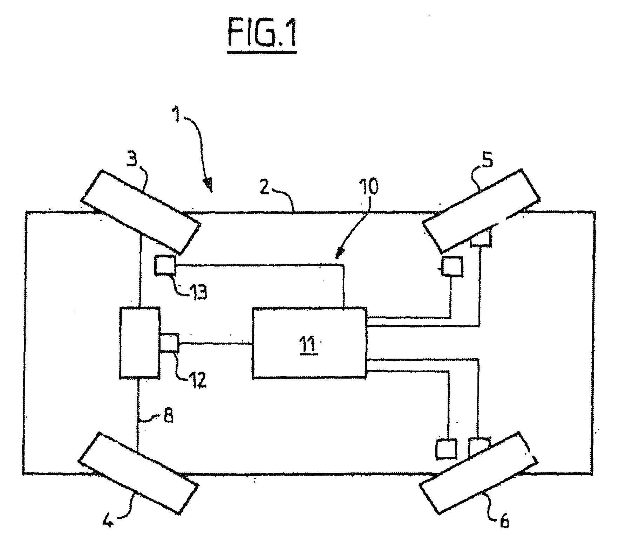

Comme on peut le voir à titre d'exemple sur la figure 1, le véhicule 1 comprend un châssis 2, deux roues avant directrices 3 et 4 et deux roues arrières directrices 5 et 6, les roues étant reliées au châssis 2 par un mécanisme de suspension non représenté.

Le dispositif de braquage des roues arrière 10 comprend une unité centrale 11, un capteur 12 de la position de braquage des roues avant, un capteur 13 de la vitesse de rotation des roues avant permettant de déterminer la vitesse V du véhicule.

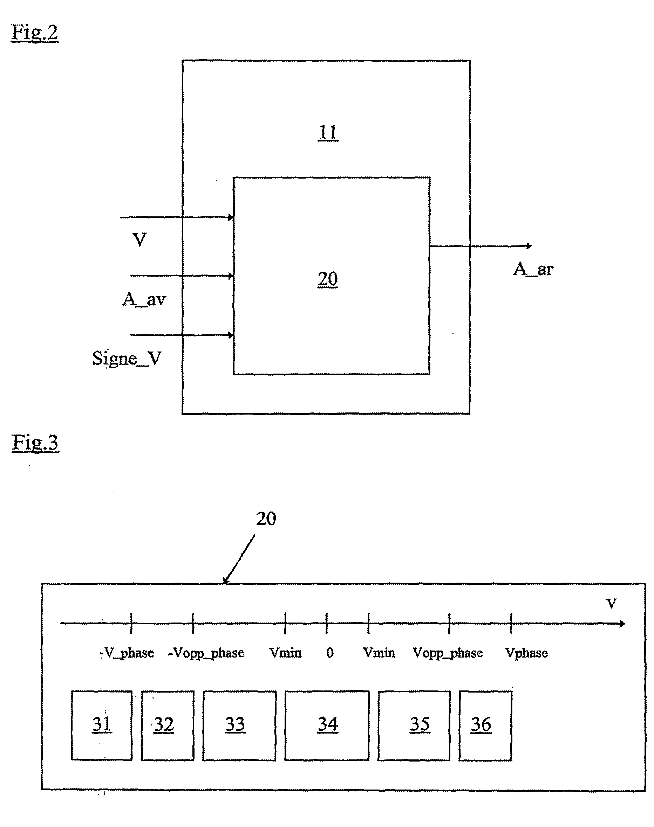

Tel que représenté à la figure 2, l'unité centrale 11 du véhicule comprend un bloc de calcul basse vitesse 20 qui reçoit en entrée au moins trois informations, à savoir la vitesse du véhicule V, la valeur de l'angle de braquage A_av des roues avant 3 et 4, et une valeur significative signe_V du rapport de vitesse engagée. Cette dernière valeur signe_V peut ainsi prendre la valeur +1 représentative du fait qu'un rapport positif est engagé, c'est-à-dire tout rapport de vitesse permettant une marche avant du véhicule, et prendre une valeur -1 représentative du fait que la marche arrière ou le point mort est engagé.

A titre d'exemple, la vitesse du véhicule est la vitesse longitudinale du véhicule fournie par le calculateur ABS, l'angle de braquage des roues avant est déduit de l'information fournie par un capteur d'angle volant, et la valeur significative du rapport de vitesse engagée peut provenir d'un autre calculateur, tel qu'un calculateur de freinage.

Le bloc dit basse vitesse 20, sur la base de ces au moins trois entrées, calcule l'angle arrière de braquage et renvoie en sortie une valeur A_ar représentative de cet angle arrière calculé. Le calcul de cette valeur A_ar est réalisé à titre d'exemple par différentes étapes de calcul décrites ci-dessous et par des paramètres du bloc de calcul basse vitesse 20 tels qu'une vitesse minimale positive Vmin, une valeur de l'angle arrière maximal positif A_ar_M et une table de vitesses {Vi}.

Dans cette table, à chaque vitesse Vi sont associés un seuil minimal d'angle de braquage avant A_av_m, un seuil maximal d'angle de braquage avant A_av_M, un coefficient directeur « pente » et une valeur de représentation A_s de la phase du braquage de roues arrière 5. 6 par rapport au braquage de roues avant 3, 4, cette valeur A_s étant égale à 1 pour une opposition de phase, c'est à dire par exemple des roues arrière 5 et 6 braquées à droite quand les roues avant 3 et 4 sont braquées à gauche, et égale à -1 pour un braquage en phase, c'est à dire par exemple des roues arrière 5 et 6 braquées à droite quand les roues avant 3 et 4 sont également braquées à droite.

La figure 3 représente un schéma fonctionnel de la structure de commande selon l'invention. Le calcul de l'angle de braquage des roues arrière A_ar est ainsi réalisé en fonction de la vitesse du véhicule V et dépend notamment du signe de cette vitesse V.

- Pour des vitesses V dont la valeur absolue est inférieure à la vitesse minimale positive Vmin paramétrée dans le bloc basse vitesse, la structure de commande renvoie en sortie un angle de braquage A_ar des roues arrière nul, selon une stratégie du module de remise à zéro. (cf. Module 34 de la figure 3).

- Pour des vitesses V dont la valeur absolue est inférieure à une vitesse positive Vopp_phase, la structure de commande renvoie en sortie un angle de braquage A_ar des roues arrière calculé selon une stratégie des modules de « maniabilité » (cf. Modules 33 et 35 de la figure 3).

- Pour des vitesses de marche arrière dont la valeur absolue est supérieure à une vitesse positive Vphase, la structure de commande renvoie en sortie un angle de braquage des roues arrière A_ar calculé selon une stratégie du module de « stabilité de la marche arrière » (cf. Module 31 de la figure 3).

- Pour des vitesses de marche arrière comprises entre les modules de maniabilité 33 et de stabilité 31, la structure de commande renvoie en sortie un angle de braquage des roues arrière A_ar calculé selon une stratégie du module de «transition en marche arrière» (cf. Module 32 de la figure 3). Ce premier module de transition 32 consiste à faire l'interpolation entre une valeur d'angle de braquage arrière A_ar en opposition de phase et une valeur d'angle de braquage arrière A_ar en phase. De plus, cette stratégie autorise une saturation sur la valeur de sortie de l'angle de braquage des roues arrière qui empêche cette valeur d'être en opposition de phase à partir d'une certaine vitesse en marche arrière.

Dans les modules maniabilité 33 et 35, stabilisation en marche arrière 31 et transition en marche arrière 32, le calcul de la valeur de braquage de l'angle arrière A_ar est calculé selon un algorithme reprenant les étapes décrites ci dessous :

Un premier seuil de vitesse V_s est calculé en prenant en compte la valeur de la vitesse V en entrée du bloc basse vitesse 20 et la valeur significative du rapport de vitesses engagé:

$$V\_s = V * Signe\_V$$

Dans un premier temps, on calcule un premier angle de braquage des roues arrières A_ar_i sur la base de la plus grande vitesse Vi de la table des vitesses {Vi} telle que Vi <= V_s.

Comme décrit ci dessus, différents paramètres correspondent à cette valeur Vi, à savoir par exemple un seuil minimal d'angle de braquage avant A_av_m, un seuil maximal d'angle de braquage avant A_av_M, un coefficient directeur «pente». De plus, une valeur A_s de représentation de la phase du braquage des roues arrière 5 et 6 par rapport au braquage des roues avant 3 et 4 est associé à chaque vitesse Vi, de sorte que pour des vitesses dont la valeur absolue est inférieure à une valeur de seuil Vopp_phase, le braquage des roues arrières soit fait en opposition de phase avec les roues avant.

Cet angle de braquage arrière A_ar prend une valeur nulle pour des valeurs absolues d'angle de braquage des roues avant inférieures à un seuil A_av_m prédéterminé.

$$A\_abs = valeur\ absolue\ (A\_av)$$

$$si\ A\_abs <= A\_av\_m$$

$$alors\ A\_ar\_i = 0$$

Cet angle de braquage arrière A_ar prend une valeur constante A_ar_M pour des valeurs absolues d'angle de braquage des roues avant supérieures à un seuil A_av_M prédéterminé.

$$si\ A\_abs >= A\_av\_M$$

$$alors\ A\_ar\_i = A\_ar\_M$$

Pour des valeurs absolues d'angle de braquage des roues avant inférieures au seuil A_av_M mais supérieures au seuil A_av_m, l'angle de braquage des roues arrière est calculé par une fonction parabolique de l'angle de braquage des roues avant.

$$si\ (A\_abs < A\_av\_M)\ et\ (A\_abs <= A\_av\_m)$$

$$d = A\_ar\_M / (A\_av\_M - A\_av\_m)^2$$

$$a = (1 - \text{Pente}) * d$$

$$b = d * (\text{Pente} *(\text{A\_av\_M} + \text{A\_av\_m}) - 2 * \text{A\_av\_m})$$

$$c = a * \text{A\_av\_m}^2 - b * \text{A\_av\_m}$$

$$\text{A\_ar\_i} = a * \text{A\_abs}^2 + b * \text{A\_abs} + c$$

Dans les deux derniers cas où l'on obtient un angle de braquage des roues arrière A_ar non nul, il est déterminé ensuite quel est le signe de cet angle de braquage, ce qui dépend du signe de l'angle de braquage des roues avant et si les roues arrières sont braquées en phase ou en opposition de phase.

$$\text{Si A\_abs} \lessgtr 0$$

$$\text{A\_signe} = \text{A\_av} / \text{A\_abs}$$

$$\text{Sinon A\_signe} = 0$$

$$\text{A\_ar\_i} = \text{A\_ar\_i} * \text{A\_signe} * \text{A\_s}$$

Dans un second temps, on calcule un deuxième angle de braquage des roues arrières A_ar_j sur la base de la plus grande vitesse Vj de la table des vitesses {Vi} telle que Vj >= V_s. Il sera compris que le calcul de A_ar_j est ensuite similaire au calcul de A_ar_i vu précédemment.

Sur la base de ces deux valeurs calculées A_ar_j et A_ar_i, la valeur finale de l'angle arrière est obtenue par interpolation linéaire sur la vitesse :

$$\text{A\_ar} = \text{A\_ar\_i} + (\text{A\_ar\_j} - \text{A\_ar\_i}) * (\text{Vs} - \text{Vi}) / (\text{Vj} - \text{Vi})$$

Lorsqu'une valeur d'angle de braquage arrière, A_ar_j ou A_ar_i, est en opposition de phase et qu'une valeur d'angle de braquage arrière, A_ar_i ou A_ar_j, est en phase, le premier module 32 de transition en marche arrière, permet de faire l'interpolation entre ces deux valeurs.

Le bloc basse vitesse 20 peut alors retourner la valeur de braquage des roues arrière A_ar.

Tel que représenté à la figure 3, un second module de transition (cf. figure 3, module 36) permet d'éviter les discontinuité avec les lois hautes vitesses propres aux marches avant. Cette transition pourra se faire par le calcul d'un gain statique.

La structure de commande représentée à la figure 3 permet également une remise à zéro des roues de façon progressive à l'approche de l'arrêt du véhicule (cf figure 3, module 34). De la sorte, la maniabilité à l'arrêt est améliorée, sans braquer les roues à vitesse nulle, ce qui permet un dimensionnement moins coûteux d'un actionneur propre au dispositif quatre roues directrices du véhicule, et de son électronique de puissance. A cet effet, pour une vitesse de valeur absolue inférieure à V_min prédéterminée, le braquage des roues arrière prend une valeur nulle.

$$\text{si } V <= V\_min, \text{ alors } A\_ar = 0$$

L'invention telle que décrite permet ainsi d'améliorer la maniabilité du véhicule en braquant les roues arrière pour une plage de vitesses allant de la marche arrière jusqu'à la marche avant. Elle permet également d'améliorer la stabilité du véhicule en braquant les roues arrières lorsque la marche arrière est engagée ou lorsque le véhicule est en roue libre, c'est à dire qu'aucun rapport de vitesse n'est engagé. L'invention vise également à protéger une transition, en marche arrière engagée ou en roue libre, entre la stratégie de maniabilité et de stabilité, ainsi qu'une remise à zéro des roues de façon progressive à l'approche de l'arrêt du véhicule.

L'invention présente une méthode innovante de calcul de l'angle des roues arrière en fonction de la vitesse du véhicule, du rapport engagé et de l'angle des roues avant. La mise au point est facilitée par le faible nombre de paramètres mis en oeuvre, par exemple les seuils de vitesses ou l'angle de braquage maximum. Un avantage de cette invention est d'améliorer la maniabilité sans braquer les roues à l'arrêt, ce qui permet un dimensionnement moins coûteux de l'actionneur et de son électronique de puissance.

## Revendications

1. Dispositif de braquage (10) des roues arrière (5, 6) d'un véhicule automobile apte à braquer les roues arrière (5, 6) du véhicule en opposition de phase, ou en phase, avec les roues avant (3, 4) selon des caractéristiques du véhicule, dispositif comportant une unité centrale (11) de calcul dans laquelle un bloc (20), dit basse vitesse, calcule un angle de braquage des roues arrière (A_ar) selon différentes stratégies qui dépendent du signe de la vitesse, **caractérisé en ce que** le bloc dit basse vitesse (20) comprend un module de stabilisation en marche arrière (31), un premier module de transition (32), un module de maniabilité marche arrière (33), un module de remise à zéro (34), un module de maniabilité marche avant (35), et un second module de transition (36), ces différents modules étant activés respectivement lorsque la vitesse varie d'une vitesse importante en marche arrière à une vitesse importante en marche avant.

2. Véhicule comprenant un dispositif de braquage (10) des roues arrière (5, 6) selon la revendication 1 et au moins un capteur (13) permettant d'estimer la vitesse du véhicule et son signe, véhicule qui comporte un bloc dit basse vitesse (20) qui calcule un angle de braquage (A_ar) des roues arrière (5, 6) lors d'une marche arrière du véhicule ou lors d'un roulage sans rapport de vitesse engagé.

3. Procédé de commande de braquage des roues arrières d'un véhicule automobile dans lequel on active un bloc dit basse vitesse (20) pour calculer un angle de braquage (A_ar) des roues arrière du véhicule lors d'une marche arrière du véhicule ou lors d'un roulage sans rapport de vitesse engagé, **caractérisé en ce que** le bloc basse vitesse (20) reçoit une information relative à la vitesse du véhicule (V), la valeur de l'angle de braquage des roues avant (A_av), et **en ce que** l'angle de braquage des roues arrière (A_ar) est calculé pour la plage complète des marches arrière du véhicule, de sorte que l'angle de braquage des roues arrières (A_ar) est de signe différent de l'angle de braquage des roues avant (A_av) lorsque la valeur absolue de la vitesse (V) est inférieure à un seuil prédéterminé (Vopp_phase), de sorte que l'angle de braquage des roues arrière (A_ar) est de même signe que l'angle de braquage des roues avant (A_av) lorsque la valeur absolue de la vitesse (V) en marche arrière est supérieure à un seuil prédéterminé (Vphase), et de sorte que l'angle de braquage des roues arrière (A_ar) est nul lorsque la valeur absolue de la vitesse (V) en marche arrière est inférieure à la vitesse minimale positive (Vmin) paramétrée dans le bloc basse vitesse (20).

4. Procédé de commande de braquage selon la revendication 3, **caractérisé en ce que** l'angle de braquage (A_ar) des roues arrière est calculé pour la plage complète des marche arrière du véhicule, de sorte qu'une première stratégie de transition (32) par interpolation linéaire donne un angle de braquage des roues arrière (A_ar) lorsque la valeur absolue de la vitesse (V) en marche arrière est supérieure à un seuil prédéterminé (Vphase) et inférieure à un seuil prédéterminé (Vphase).

5. Procédé de commande de braquage selon l'une des revendications 3 à 4, **caractérisé en ce qu'**une seconde stratégie de transition (36) permet de calculer l'angle de braquage des roues arrière (A_ar) lorsque la vitesse du véhicule (V) en marche avant tend vers des vitesses égales ou supérieures au seuil prédéterminé (Vphase).

**Claims**

1. Device (10) for steering the rear wheels (5, 6) of a motor vehicle able to steer the rear wheels (5, 6) of the vehicle in phase opposition, or in phase, with the front wheels (3, 4) according to characteristics of the vehicle, which device comprises a central calculation unit (11) in which a so-called low-speed block (20) calculates an angle of steer of the rear wheels (A_ar) according to various strategies which depend on the sign of the speed, **characterized in that** the so-called low-speed block (20) comprises a reversing stabilization module (31), a first transition module (32), a reverse handleability module (33), a reset to zero module (34), a forward handleability module (35) and a second transition module (36), these various modules being activated respectively when the speed varies from a significant reversing speed to a significant forward speed.

2. Vehicle comprising a device (10) for steering the rear wheels (5, 6) according to Claim 1 and at least one sensor (13) making it possible to estimate the speed of the vehicle and its sign, which vehicle comprises a so-called low-speed block (20) which calculates an angle of steer (A_ar) of the rear wheels (5, 6) when the vehicle is reversing or when rolling with no gear ratio engaged.

3. Method of control of steering of the rear wheels of a motor vehicle, in which a so-called low-speed block (20) is activated so as to calculate an angle of steer (A_ar) of the rear wheels of the vehicle when the vehicle is reversing or when rolling with no gear ratio engaged, **characterized in that** the low-speed block (20) receives a cue relating to the speed of the vehicle (V), the value of the angle of steer of the front wheels (A_av), and **in that** the angle of steer of the rear wheels (A_ar) is calculated for the complete span of the reverse capabilities of the vehicle, so that the angle of steer of the rear wheels (A ar) is of different sign from the angle of steer of the front wheels (A_av) when the absolute value of the speed (V) is less than a predetermined threshold (Vopp_phase), so that the angle of steer of the rear wheels (A_ar) is of the same sign as the angle of steer of the front wheels (A_av) when the absolute value of the speed (V) when reversing is greater than a predetermined threshold (Vphase), and so that the angle of steer of the rear wheels (A_ar) is zero when the absolute value of the speed (V) when reversing is less than the positive minimum speed (Vmin) parametrized into the low-speed block (20).

4. Method of control of steering according to Claim 3, **characterized in that** the angle of steer (A_ar) of the rear wheels is calculated for the complete span of the reverse capabilities of the vehicle, so that a first transition strategy (32) by linear interpolation gives an angle of steer of the rear wheels (A_ar) when the absolute value of the speed (V) when reversing is greater than a predetermined threshold (Vphase) and less than a predetermined threshold (Vphase).

5. Method of control of steering according to either of Claims 3 to 4, **characterized in that** a second transition strategy (36) makes it possible to calculate the angle of steer of the rear wheels (A_ar) when the speed of the vehicle (V) when travelling forward tends to speeds equal to or greater than the predetermined threshold (Vphase).

**Patentansprüche**

1. Lenkeinschlagvorrichtung (10) der Hinterräder (5, 6) eines Kraftfahrzeugs, die in der Lage ist, die Hinterräder (5, 6) des Fahrzeugs in Gegenphase oder in Phase mit den Vorderrädern (3, 4) gemäß Merkmalen des Fahrzeugs einzuschlagen, wobei die Vorrichtung eine zentrale Recheneinheit (11) aufweist, in der ein Block (20), niedrige Geschwindigkeit genannt, einen Einschlagwinkel der Hinterräder (A_ar) gemäß verschiedenen Strategien berechnet, die vom Vorzeichen der Geschwindigkeit abhängen, **dadurch gekennzeichnet, dass** der Block niedrige Geschwindigkeit (20) ein Rückwärtsgang-Stabilisierungsmodul (31), ein erstes Übergangsmodul (32), ein Rückwärtsgang-Steuerbarkeitsmodul (33), ein Nullrückstellungsmodul (34), ein Vorwärtsgang-Steuerbarkeitsmodul (35), und ein zweites Übergangsmodul (36) aufweist, wobei diese verschiedenen Module aktiviert werden, wenn die Geschwindigkeit von einer großen Geschwindigkeit im Rückwärtsgang zu einer großen Geschwindigkeit im Vorwärtsgang variiert.

**2.** Fahrzeug, das eine Lenkeinschlagvorrichtung (10) der Hinterräder (5, 6) nach Anspruch 1 und mindestens einen Sensor (13) aufweist, der es ermöglicht, die Geschwindigkeit des Fahrzeugs und ihr Vorzeichen zu schätzen, wobei das Fahrzeug einen niedrige Geschwindigkeit genannten Block (20) aufweist, der einen Lenkeinschlagwinkel (A_ ar) der Hinterräder (5, 6) bei einem Rückwärtsgang des Fahrzeugs oder bei einem Fahren ohne eingelegten Gang berechnet.

**3.** Verfahren zur Steuerung des Lenkeinschlags der Hinterräder eines Kraftfahrzeugs, bei dem ein niedrige Geschwindigkeit genannter Block (20) aktiviert wird, um einen Einschlagwinkel (A_ar) der Hinterräder des Fahrzeugs bei einem Rückwärtsgang des Fahrzeugs oder bei einem Fahren ohne eingelegten Gang zu berechnen, **dadurch gekennzeichnet, dass** der Block niedrige Geschwindigkeit (20) eine Information bezüglich der Geschwindigkeit des Fahrzeugs (V) und den Wert des Lenkeinschlagwinkels der Vorderräder (A_av) empfängt, und dass der Lenkeinschlagwinkel der Hinterräder (A_ar) für den vollständigen Bereich der Rückwärtsgänge des Fahrzeugs derart berechnet wird, dass der Lenkeinschlagwinkel der Hinterräder (A_ar) ein anderes Vorzeichen hat als der Lenkeinschlagwinkel der Vorderräder (A_av), wenn der Absolutwert der Geschwindigkeit (V) unter einem vorbestimmten Schwellwert (Vopp_phase) liegt, dass der Lenkeinschlagwinkel der Hinterräder (A_ar) das gleiche Vorzeichen hat wie der Lenkeinschlagwinkel der Vorderräder (A_av), wenn der Absolutwert der Geschwindigkeit (V) im Rückwärtsgang größer ist als ein vorbestimmter Schwellwert (Vphase), und dass der Lenkeinschlagwinkel der Hinterräder (A_ar) Null ist, wenn der Absolutwert der Geschwindigkeit (V) im Rückwärtsgang unter der positiven Mindestgeschwindigkeit (Vmin) liegt, die in dem Block niedrige Geschwindigkeit (20) parametriert ist.

**4.** Lenkeinschlag-Steuerverfahren nach Anspruch 3, **dadurch gekennzeichnet, dass** der Lenkeinschlagwinkel (A_ ar) der Hinterräder für den vollständigen Bereich der Rückwärtsgänge des Fahrzeugs derart berechnet wird, dass eine erste Übergangsstrategie (32) durch lineare Interpolation einen Lenkeinschlagwinkel der Hinterräder (A_ar) ergibt, wenn der Absolutwert der Geschwindigkeit (V) im Rückwärtsgang höher ist als ein vorbestimmter Schwellwert (Vphase) und niedriger als ein vorbestimmter Schwellwert (Vphase).

**5.** Lenkeinschlag-Steuerverfahren nach einem der Ansprüche 3 bis 4, **dadurch gekennzeichnet, dass** eine zweite Übergangsstrategie (36) es ermöglicht, den Lenkeinschlagwinkel der Hinterräder (A_ar) zu berechnen, wenn die Geschwindigkeit des Fahrzeugs (V) im Vorwärtsgang zu Geschwindigkeiten gleich dem oder größer als der vorbestimmte Schwellwert (Vphase) tendiert.

EP 1 699 677 B1

FIG.1

9

Fig.2

11

V →

A_av →

Signe_V →

20

→ A_ar

Fig.3

20

V

-V_phase  -Vopp_phase  Vmin  0  Vmin  Vopp_phase  Vphase

| 31 | 32 | 33 | 34 | 35 | 36 |

Fig. 4 :

Fig. 5 :

**RÉFÉRENCES CITÉES DANS LA DESCRIPTION**

**Documents brevets cités dans la description**

- JP 01074177 A

- US 5337850 A